Europäisches Patentamt

European Patent Office

Office européen des brevets

(11) Veröffentlichungsnummer: **0 043 527**
**B1**

(12) **EUROPÄISCHE PATENTSCHRIFT**

(45) Veröffentlichungstag der Patentschrift:
**12.10.83**

(51) Int. Cl.³: **B 22 D 17/22**, B 29 F 1/022

(21) Anmeldenummer: **81105002.0**

(22) Anmeldetag: **27.06.81**

(54) Horizontal-Druckgiessmaschine.

(30) Priorität: **03.07.80 DE 3025189**

(43) Veröffentlichungstag der Anmeldung:
**13.01.82 Patentblatt 82/2**

(45) Bekanntmachung des Hinweises auf die Patenterteilung:
**12.10.83 Patentblatt 83/41**

(84) Benannte Vertragsstaaten:
**DE FR GB IT**

(56) Entgegenhaltungen:
**CH-A-356 872**
**CH-A-500 792**

(73) Patentinhaber: **Seitz, Horst, Pestalozzistrasse 21,
D-3500 Kassel (DE)**

(72) Erfinder: **Seitz, Horst, Pestalozzistrasse 21,
D-3500 Kassel (DE)**

(74) Vertreter: **Eberhard, Friedrich, Dr., Am Thyssenhaus 1,
D-4300 Essen (DE)**

Europa-Patent Text Horizontal-Druckgiessmaschine

Die Erfindung bezieht sich auf eine Horizontal-Druckgiessmaschine mit einer vertikal ausgerichteten festen ersten Aufspannplatte und einer im Abstand dazu angeordneten vertikal ausgerichteten beweglichen zweiten Aufspannplatte der im Oberbegriff des Patentanspruchs 1 genannten Art.(CH-A-500792).

Horizontal-Druckgiessmaschinen finden zunehmend Verwendung, um Werkstücke aus Leichtmetallen, z.B. Aluminium, Magnesium und deren Legierungen zu giessen.

Bei bekannten Horizontal-Druckgiessmaschinen dieser Art wird die bewegliche Aufspannplatte zum Befestigen sowie Entfernen der Giessformhälften auf den beiden Aufspannplatten sowie zum Schliessen bzw. Öffnen der Giessformhälften während des Betriebes in einer horizontalen Ebene parallel zur festen Aufspannplatte verschoben, d.h. zum Schliessen auf sie zu- und zum Öffnen von ihr fortbewegt. Die bewegliche Aufspannplatte gleitet dabei auf Führungsschienen einer Grundplatte und wird durch – im allgemeinen vier – horizontale Säulen, die sich zwischen der festen Aufspannplatte und einem festen Widerlager erstrecken, geführt. Die Verschiebung und das Schliessen der beiden Formhälften erfolgt mit Hilfe hydraulisch betätigter Doppel-Kniehebelgelenke, die zwischen dem festen Widerlager und der beweglichen Aufspannplatte wirksam sind. Über dieses Kniehebelsystem werden die unter Umständen sehr hohen Schliesskräfte aufgebracht.

Der Erfindung liegt die Aufgabe zugrunde, eine Horizontal-Druckgiessmaschine der im Oberbegriff des Patentanspruchs 1 genannten Art zu vereinfachen und zu verbessern und insbesondere so auszubilden, dass der benötigte Platzbedarf verringert wird.

Diese Aufgabe wird erfindungsgemäss durch die kennzeichnenden Merkmale des Patentanspruchs 1 gelöst. Die bewegliche Aufspannplatte wird nicht mehr in einer horizontalen Ebene parallel zur festen Aufspannplatte verschoben, sondern zum Montieren und Demontieren der Giessformhälften um eine ortsfest horizontale Achse in eine zumindest annähernd horizontale Montagestellung verschwenkt. Das Schliessen und Öffnen der beiden Formhälften wird durch entsprechendes Verschieben einer verschiebbar an der schwenkbaren Platte gelagerten Montageplatte bewirkt. Durch diese Gestaltung der Druckgiessmaschine ergibt sich zum einen eine wesentliche Raumersparnis, da die Druckgiessmaschine erheblich kürzer baut, denn die viel Raum benötigenden üblichen Kniegelenkhebel werden nicht benötigt und darüber hinaus wird ein Teil des sonst zum Entnehmen des Werkstückes benötigten Raumes durch die Schwenkbarkeit der beweglichen Aufspannplatte gewonnen.

Von wesentlichem Vorteil ist auch, dass die Giessformhälften wesentlich einfacher montiert und demontiert werden können, weil die bewegliche Aufspannplatte dazu in ihre horizontale Montagestellung geschwenkt wird. Diese Erleichterung macht sich nicht nur bei der Montage der Giessformhälfte bemerkbar, die an der beweglichen Aufspannplatte befestigt wird, sondern auch bei der Befestigung der an der festen Aufspannplatte zu befestigenden Giessformhälfte. Diese kann nämlich zunächst auf der in ihrer horizontalen Montagestellung befindlichen Aufspannplatte mittels Hilfsschrauben o.ä. mit aufmontiert werden und danach gegen ihre vertikale feste Aufspannplatte geschwenkt und dort endgültig montiert werden.

Erfindungswesentliche und vorteilhafte Ausgestaltungen der Erfindung sind anhand eines in der Zeichnung dargestellten Ausführungsbeispieles der Erfindung erläutert.

In der Zeichnung zeigen in schematischer Darstellung

Fig. 1 die Hauptansicht einer erfindungsgemässen Horizontal-Druckgiessmaschine,

Fig. 2 die Draufsicht der in Fig. 1 gezeigten Maschine,

Fig. 3 die in Fig. 1 mit III bezifferte Seitenansicht dieser Maschine,

Fig. 4 ein Detail der Führung und Kopplung der beweglichen Montageplatte und

Fig. 5 ein schematisches hydraulisches Schaltbild der hydraulischen Kolben/Zylinder-Einheiten für die Verschiebung der Montageplatte.

In der Zeichnung sind nur die für das Verständnis der Erfindung notwendigen Einzelheiten dargestellt und beziffert.

Die Horizontal-Druckgiessmaschine zum Herstellen insbesondere von Leichtmetall-Werkstükken besteht im wesentlichen aus einer vertikal ausgerichteten festen ersten Aufspannplatte 1, an der eine erste Giessformhälfte 3 befestigt ist, und aus einer beweglichen zweiten Aufspannplatte 2, an welcher eine zweite Giessformhälfte 4 befestigt ist. In der gezeigten Darstellung sind die beiden Giessformhälften 3 und 4 gerade auseinandergefahren und das fertiggegossene Werkstück ist gestrichelt angedeutet und mit 14 beziffert. Werkstück wird nach Ausschwenken der Aufspannplatte 2 in strichpunktierte Lage mit Hilfe üblicher, nicht weiter dargestellter hydraulischer Auswerfstifte aus der Giessformhälfte 4 entfernt.

Die bewegliche zweite Aufspannplatte 2 ist zweiteilig ausgebildet. Sie besteht aus einer Grundplatte 5 und einer damit in Verbindung stehenden Montageplatte 6, welche der festen ersten Aufspannplatte 1 zugekehrt ist. Die Montageplatte 6 ist auf der Grundplatte 5 verschiebbar gelagert und kann – zum Schliessen der beiden Giessformhälften 3 und 4 – auf die erste Aufspannplatte 1 zu- und – zum Öffnen beider Giessformhälften – von dieser fortbewegt werden. Dieses Schliessen und Öffnen wird mit Hilfe hydraulischer Kolben/Zylinder-Einheiten 9 durchgeführt, deren Zylindergehäuse an der Grundplatte 5 befestigt sind und deren Kolben an der Montageplatte 6 angreifen.

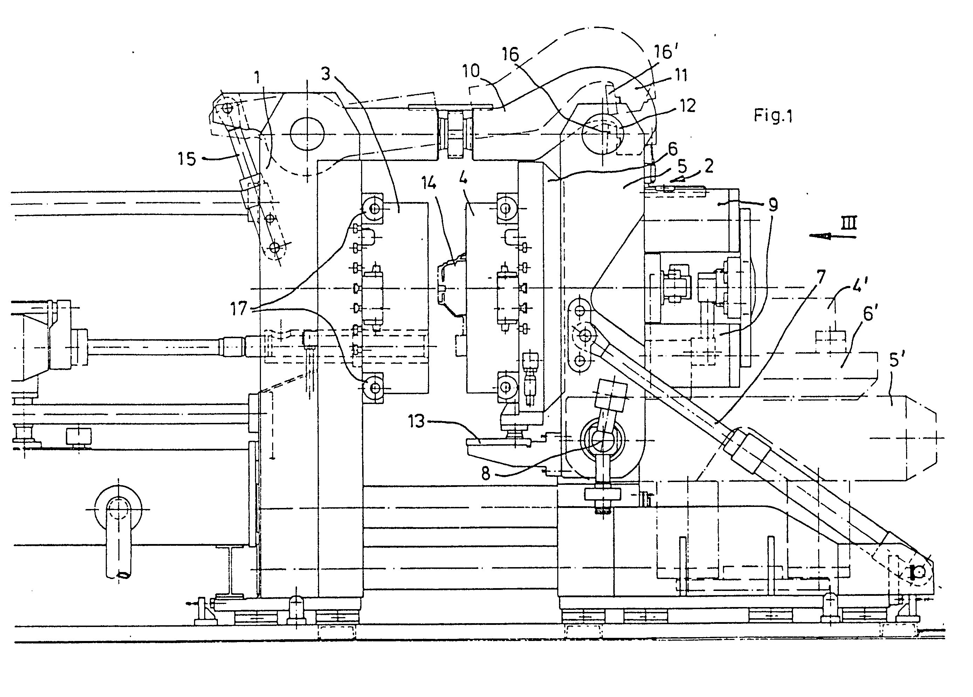

Die Grundplatte 5 ist ihrerseits nicht verschiebbar. Sie ist dagegen über eine ortsfeste horizontale Achse 8 schwenkbar am nicht weiter bezifferten Grundrahmen o.ä. der Druckgiessmaschine schwenkbar gelagert, so dass sie aus ihrer in Fig. 1 dargestellten vertikalen Arbeitsstellung heraus in eine zumindest annähernd horizontale Montagestellung verschwenkt werden kann, die in Fig. 1 gestrichelt dargestellt ist, wobei die Bezifferung der Grundplatte, Montageplatte und der zugehörigen Giessformhälfte jeweils mit einem Apostroph gekennzeichnet ist.

Die horizontale Montagestellung wird insbesondere dann eingenommen, wenn die Giessformhälften an den Aufspannplatten befestigt bzw. von diesen entfernt werden und wenn nach jedem Maschinentakt das Werkstück aus der Maschine entnommen wird. Man erkennt, dass sowohl die Montage als auch die Demontage der Giessformhälften dadurch sehr vereinfacht und erleichtert wird; und zwar nicht nur bezüglich der auf der Montageplatte 6 zu befestigenden Formhälfte, sondern auch bezüglich der an der festen ersten Aufspannplatte 1 zu befestigenden Giessformhälfte. Diese kann hilfsweise nämlich zunächst an der heruntergeklappten Montageplatte 6 befestigt werden. Anschliessend kann diese Giessformhälfte mit der Montageplatte 6 bzw. der Grundplatte 5 vertikal aufgerichtet und gegen die feste Aufspannplatte 1 gelegt werden, wo sie sodann in ihrer richtigen Position befestigt wird.

Um die beim Druckgiessen auftretenden hohen Einpresskräfte aufzufangen, ist die verschwenkbare Grundplatte 5 in ihrer vertikalen Arbeitsstellung mechanisch mit der ersten Aufspannplatte 1 verriegelt. Hierzu sind schwingenförmige Verriegelungsarme 10 vorgesehen, welche schwenkbar an der festen ersten Aufspannplatte 1 angelenkt sind. In der vertikalen Arbeitsstellung umgreifen sie ihnen zugeordnete Widerlager 12 der Grundplatte 5. Im gezeigten Ausführungsbeispiel sind die Verriegelungsarme im oberen Randbereich der Aufspannplatte 1 angelenkt und die Widerlager 12 im oberen Randbereich der Grundplatte 5 angeordnet.

Die freien Enden 11 der Verriegelungsarme 10 sind hakenförmig ausgebildet und besitzen schräge Anlageflächen 16, welche sich an die beweglich gelagerten Widerlager 12 satt anlegen. Zur Inbetriebnahme der Druckgiessmaschine wird die Grundplatte 5 aus ihrer gestrichelt dargestellten horizontalen Montagestellung zunächst zum Verriegeln in eine etwas über ihre vertikale Arbeitsstellung hinaus gegen die feste erste Aufspannplatte 1 leicht geneigte Einfädelstellung geschwenkt, so dass die auf die Grundplatte 5 abgesenkten Verriegelungsarme 10 zunächst nur mit ihren schrägen Anlageflächen 16 dem beweglichen Widerlager 12 der Grundplatte 5 gegenüber liegen. Anschliessend wird die Grundplatte bei auf sie abgesenkten Verriegelungsarmen aus ihrer etwas geneigten Einfädelstellung in ihre vertikale Arbeitsstellung zurückgeschwenkt, so dass die hakenförmigen Enden 11 der Verriegelungsarme 10 die Widerlager 12 räumlich definiert und sicher umgreifen, wobei die schrägen Anlageflächen 16 z.B. etwa 10° gegen die Vertikale geneigt sind. Die Stellung, welche die angehobenen Verriegelungsarme 10 einnehmen, wenn die Grundplatte sich nicht in ihrer vertikalen Arbeitstellung befindet, ist gestrichelt angedeutet.

Die nach Schliessen der beiden Giessformhälften 3, 4 beim eigentlichen Giessvorgang auftretenden hohen Kräfte, werden so über die Verriegelungsarme 10 sicher abgefangen.

Das Verschwenken der beweglichen Aufspannplatte 2 und der Verriegelungsarme 10 sowie das Öffnen und Schliessen der beiden Giessformhälften 3 und 4 erfolgt im Ausführungsbeispiel hydraulisch. So greifen an der schwenkbaren Grundplatte 5 hydraulische Kolben/Zylinder-Einheiten 7, an den Verriegelungsarmen 10, hydraulische Kolben/Zylinder-Einheiten 15 und an der auf der Grundplatte 5 beweglich gelagerten Montageplatte 6 hydraulische Kolben/Zylinder-Einheiten 9 an.

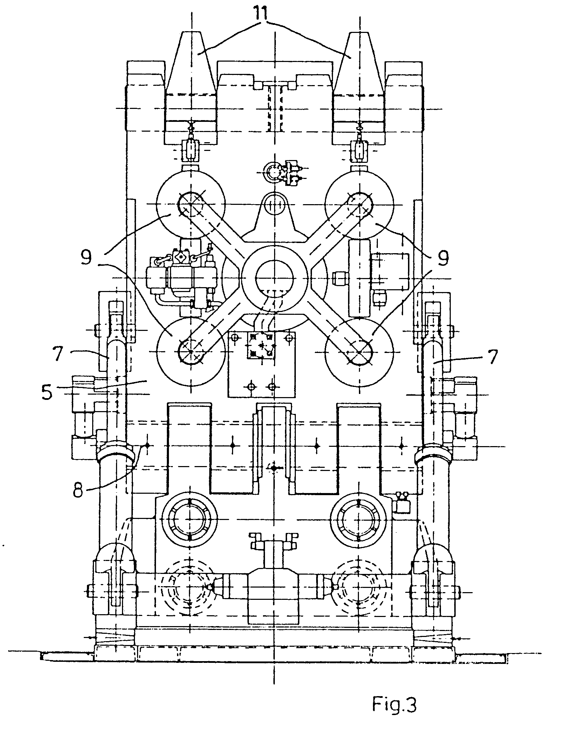

Um die auf die bewegliche Montageplatte 6 wirkenden Schliesskräfte möglichst gleichmässig über die Aufspannfläche zu verteilen, sind im Ausführungsbeispiel vier im Gleichlauf gesteuerte Kolben/Zylinder-Einheiten 9 vorgesehen, von denen sich jeweils zwei diametral gegenüberliegen, wie aus Fig. 3 erkennbar.

Die verschiebbare Montageplatte 6 stützt sich vertikal auf einer horizontalen Stützkonsole 13 der Grundplatte 5 federnd ab. Die Führung der verschiebbaren Montageplatte 6 an der Grundplatte 5 ist nicht starr, sondern nachgiebig ausgebildet. Dadurch können sich die beiden Giessformhälften 3 und 4 während des Schliessvorganges bei Parallelitätsabweichungen aneinander ausrichten. Die beiden Formhälften 3 und 4 liegen daher zwanglos und verspannungsfrei aneinander an.

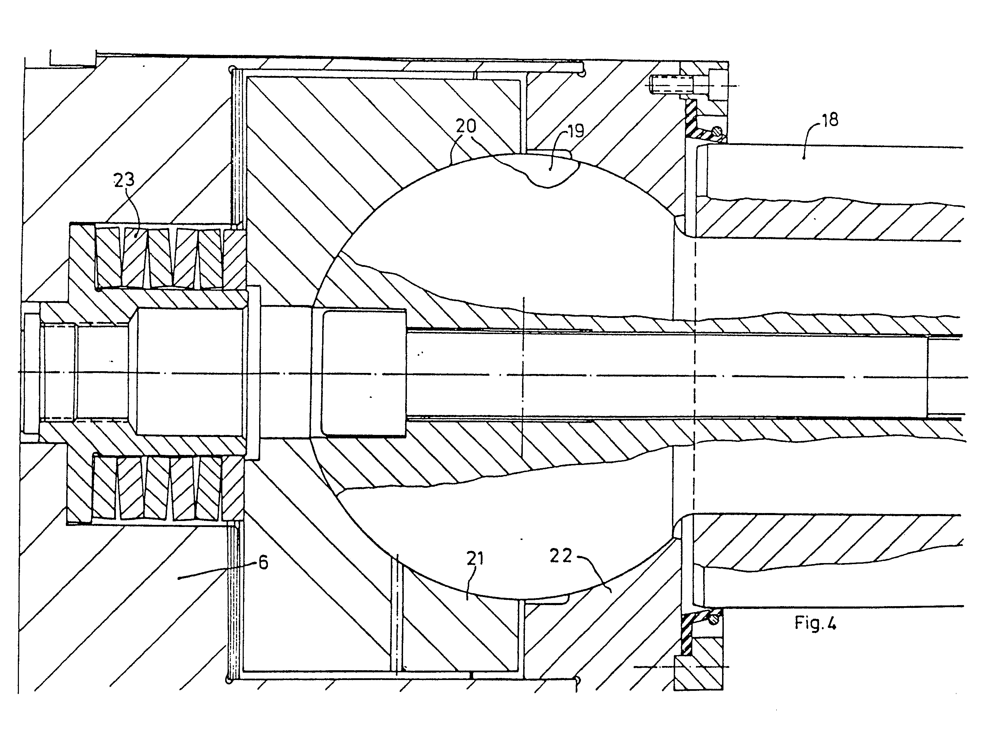

Wie aus Fig. 4 zu erkennen ist, sind die freien Enden der an der Montageplatte 6 angreifenden Kolbenstangen 18 der hydraulischen Kolben/Zylinder-Einheiten 9 als Kugelköpfe 19 ausgebildet, welche in Kugelpfannen 20 gelagert sind, die innerhalb der Montageplatte 6 angeordnet sind. Die Kugelpfannen 20 sind quer zur Kolben/Zylinder-Längsachse zweigeteilt und liegen unter der Wirkung einer Federvorrichtung 23 an den Kugelköpfen 19 an. Die beiden Kugelpfannen-Hälften sind mit 21 und 22 beziffert. Durch diese Ausbildung kann sich die Montageplatte 6 während des Schliessvorganges erforderlichenfalls von ihrer Führung in der Grundplatte abkoppeln, um die beiden Giessformhälften 3 und 4 auch bei gegebenenfalls vorliegender Parallelitätsabweichung zwangsfrei aneinander zur Anlage zu bringen. Während des Schliessvorganges, d.h. wenn die hydraulischen Kolben/Zylinder-Einheiten 9 über ihre Kolbenstangen 18 auf die Montageplatte 6 einwirken, können sich nämlich die Kugelköpfe 19 erforderlichenfalls gegen die Wirkung der Federspannung der Federvorrichtung 23 um ein vorgegebenes Mass weiter in die Montageplatte 6 hineinverlagern, wobei der betreffende Kugelkopf dann nur noch an der linken Hälfte 21 der Kugelpfanne anliegt und sich von der rechten Kugelpfannen-Hälfte 22 etwas abhebt. Die linke Kugelpfannen-Hälfte 21 wird dabei etwas weiter nach links verlagert. Durch diese Abkopplungsmöglichkeit ergibt sich der wesentliche Vorteil, dass zwischen den beiden Aufspannplatten 1 und 2 eine gewisse Abweichung ihrer Parallelität vorliegen darf, ohne dass dadurch die Dichtigkeit der aneinander gelegten Giessformhälften beeinträchtigt wird.

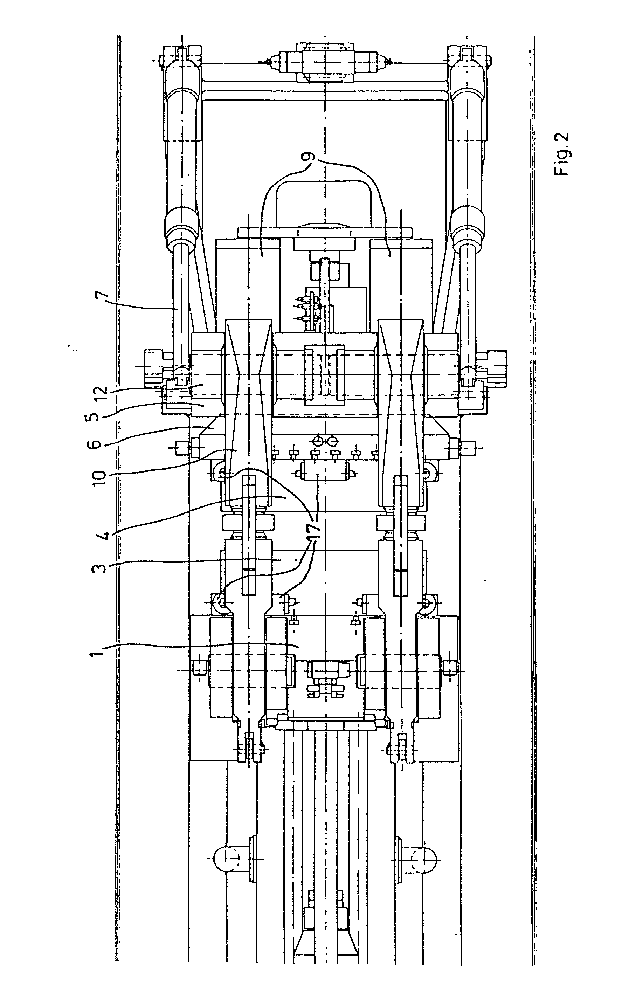

Die beiden Giessformhälften 3 und 4 sind an den zugehörigen Aufspannplatten 1 bzw. 2 im vorliegenden Ausführungsbeispiel mit Hilfe hydraulischer Spannelemente, den Formspannern 17, befestigt. Diese bestehen aus hydraulischen Kolben/Zylinder-Einheiten mit kegeligen oder keilförmigen Kolbenfortsätzen, die parallel zur Aufspannebene verlaufen und in korrespondierende kegelige oder keilförmige Ausnehmungen der entsprechenden Giessformhälften 3, 4 eingreifen. Das Prinzip dieser Aufspannung ist aus den Figuren 1 und 2 deutlich zu erkennen. Die keilförmigen bzw. kegeligen Glieder sind dabei so bemessen und angeordnet, dass die Giessformhälften fest gegen die Aufspannplatten 1 bzw. 2/6 gepresst werden. Durch die Verwendung hydraulischer Formspanner ergeben sich sehr kurze Montagezeiten, weil die beiden Giessformhälften nicht mehr mittels mechanischer Spannschrauben manuell befestigt werden müssen. Selbstverständlich ist es möglich, als besondere Sicherung zusätzlich einige mechanische Spannglieder vorzusehen.

Häufig ist es erforderlich, Druckluft, Kühlwasser und/oder Hydraulikflüssigkeit in die Giessformhälften einzubringen, weil entweder für eine besondere Kühlung gesorgt werden muss oder Kernzüge etc. versorgt werden müssen. Üblicherweise werden die dazu benötigten Versorgungsleitungen ausserhalb der Formen nachträglich installiert, was mitunter ganze Leitungsbündel bedingt, die zum Teil sogar noch flexibel sein müssen, weil sie den Schliess- und Öffnungsbewegungen der Aufspannplatten folgen können müssen. Davon abweichend erfolgt die Versorgung der beiden Giessformhälften 3 und 4 mit den benötigten Medien nicht durch äussere, sondern durch intern verlegte Leitungen in den Giessformhälften sowie in den zugehörigen Aufspannplatten. Der Übergang von den Leitungen in der Aufspannplatte 1 bzw. der Montageplatte 6 zu den Leitungen in den zugehörigen Giessformhälften 3 bzw. 4 erfolgt über Leitungsanschlüsse im Boden der Giessformhälften, welche beim Aufspannen der Giessformhälften auf die feste Aufspannplatte 1 bzw. auf die Montageplatte 6 selbsttätig mit dort mündenden, zugeordneten Leitungsanschlüssen der Platten gekoppelt werden. Die sonst erforderliche nachträgliche Installierung von Rohrleitungen entfällt, was nicht nur zu einer weiteren Verkürzung der Montage- und Demontagezeiten führt, sondern gleichzeitig auch eine Erhöhung der Betriebssicherheit bedeutet, weil fest verlegte interne Leitungen z.B. weniger anfällig gegen äussere Beschädigungen sind.

Das Öffnen und Schliessen der Giessformhälften 3 und 4 erfolgt rein hydraulisch, d.h. also auch ohne Verwendung irgendwelcher mechanischer Kniehebelgelenke o.ä. Die rein hydraulische Schliessung der Formen wird dadurch ermöglicht, dass die Montageplatte 6 nur vergleichsweise kurze Schliessbewegungen ausführen muss, da ein Teil des bei konventionellen Druckgiessmaschinen üblichen Weges bereits durch die Schwenkbewegung der Grundplatte 5 zurückgelegt worden ist. Wolle man bei konventionellen Druckgiessmaschinen eine rein hydraulische Schliessung der Formen verwirklichen, müssten sehr lange hydraulische Zylinder eingesetzt werden, was sich wegen der Kompressibilität der Hydraulikflüssigkeit praktisch verbietet.

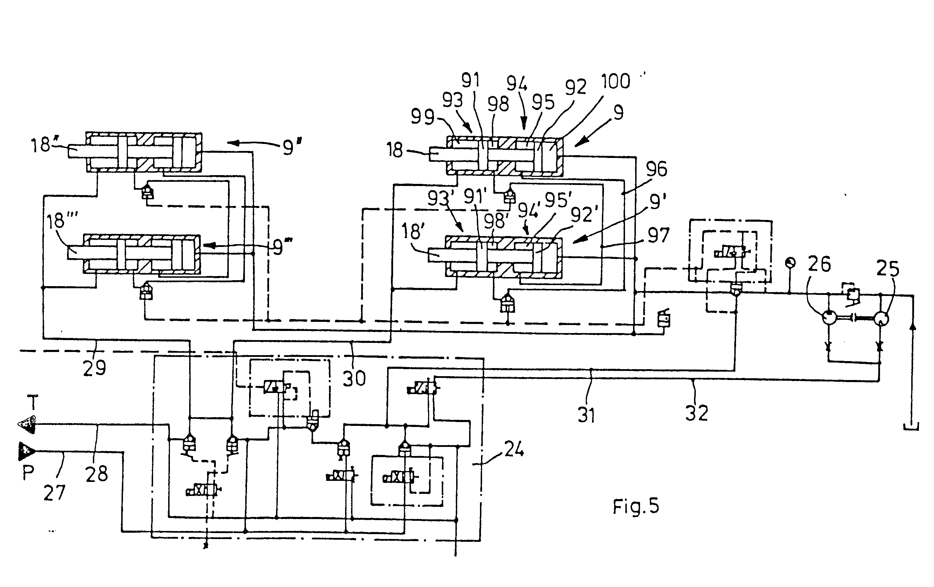

Für die als Schliesszylinder fungierenden hydraulischen Kolben/Zylinder-Einheiten 9 können mit Vorteil Tandem-Anordnungen verwendet werden, bei denen jeweils zwei in getrennten Zylinderräumen wirkende Kolben auf eine gemeinsame Kolbenstange wirken, wie dies in Fig. 5 schematisch dargestellt ist, wobei entsprechend Fig. 3 vier Kolben/Zylinder-Einheiten vorgesehen sind, welche mit 9 bis 9''' beziffert sind. Jeweils Zylindereinheit 9 und 9' bzw. 9'' und 9''' liegen sich diagonal gegenüber. Die voneinander getrennten Zylinderräume sind mit 93 und 94 und die darin arbeitenden Kolben mit 91 und 92 beziffert. Die Bezifferung ist nur für die beiden Kolben/Zylinder-Einheiten 9 und 9' vorgenommen.

Um einen Gleichlauf der hydraulischen Kolben/Zylinder-Einheiten 9 zu erzielen, sind jeweils die beiden einander diametral gegenüberliegenden Einheiten druckmässig miteinander gekoppelt und zwar derartig, dass jeweils eine sich beim Verschieben der Kolben 91, 92 bzw. 91', 92' verkleinernde Zylinderkammer der einen Einheit leitungsmässig mit einer sich dabei vergrössernden Zylinderkammer der anderen Einheit verbunden ist und umgekehrt. So ist im gezeigten Ausführungsbeispiel gemäss Fig. 5 die Zylinderkammer 95 der Kolben/Zylinder-Einheit 9 über eine Leitung 96 mit der Zylinderkammer 98' der zweiten Einheit 9' und die Zylinderkammer 98 der ersten Einheit 9 über die Leitung 97 mit der Zylinderkammer 95' der zweiten Einheit 9' verbunden. Beim Vorlauf der Kolben, d.h. wenn die Montageplatte 6 auf die feste Aufspannplatte 1 zubewegt wird, wird somit aus der Zylinderkammer 95 über die Leitung 96 Hydraulikflüssigkeit in die Zylinderkammer 98' der zweiten Zylindereinheit 9' und umgekehrt Hydraulikflüssigkeit aus der Zylinderkammer 95' über die Leitung 97 in die Zylinderkammer 98 geleitet. Beim Rücklauf der Kolben, d.h. beim Öffnen der Schliessform etc. wird umgekehrt Hydraulikflüssigkeit aus der Zylinderkammer 98 in die Zylinderkammer 95' bzw. aus der Zylinderkammer 98' in die Zylinderkammer 95 geleitet. Die Zylinder- und Kolbendurchmesser dieser vier erwähnten Zylinderkammern stimmen überein. Daher kann aus der einen Zylinderkammer jeweils nur so viel Hydrauliköl herausfliessen wie die damit korrespondierende Zylinderkammer der anderen Kolben/Zylinder-Einheit aufnimmt. Zwangsläufig ergibt sich somit der gewünschte Gleichlauf der paarweise miteinander verknüpften diagonalen Kolben/Zylinder-Einheiten.

Die zum Vor- und Zurückschieben der Montageplatte 6, d.h. zum Vor- und Rücklauf der Kolben/Zylinder-Einheiten 9 benötigte Hydraulikflüssigkeit wird den Einheiten von einer nicht weiter dargestellten Druckquelle, z.B. eine Pumpe, P über die Leitung 27 zugeführt und von einer nur schematisch angedeuteten Steuerschaltung 24 entweder über die Leitungen 29 und 30 den Zylinderkammern 99 etc. oder über die Leitung 31 den Zylinderkammern 100 etc. zugeführt. Der Rücklauf der Hydraulikflüssigkeit erfolgt über die Leitung 28.

Während für das reine Verschieben der Montageplatte 6 ein Hydraulikdruck von z.B. 150 bar genügt, wird für den Schliessvorgang ein wesentlich höherer Druck von z.B. 350 bar benötigt. In vorteilhafter Weise wird dieser erhöhte Druck mit Hilfe eines Hydraulikmotors 25, der eine Hydraulikpumpe 26 antreibt, erzeugt, und zum erforderlichen Zeitpunkt den Kolben/Zylinder-Einheiten 9 bis 9''' zugeführt. Durch die Steuerschaltung 24 wird hierzu der Ölstrom von der Leitung 31 auf die Leitung 32 umgeschaltet. Der Hydraulikmotor 25 und die Pumpe 26 liegen also im über die Leitung 27 eingespeisten Hydraulikstrom. Diese Lösung ist wesentlich vorteilhafter, als wenn für die Erzeugung des erhöhten Hydraulikdruckes eine separate, beispielsweise über einen besonderen Elektromotor angetriebene Hydraulikpumpe verwendet werden würde. Neben den erwähnten Bauelementen sind innerhalb des Hydraulik-Kreises wie üblich eine Vielzahl weiterer Steuer- oder Schutzeinrichtungen, wie gesteuerte Rückschlagventile, Schutzventile etc. vorhanden, die jedoch nicht erfindungswesentlich sind und daher nicht weiter beziffert oder erläutert sind.

### Patentansprüche

1. Horizontal-Druckgiessmaschine, mit einer vertikal ausgerichteten festen ersten Aufspannplatte (1) und einer im Abstand dazu angeordneten vertikal ausgerichteten beweglichen zweiten Aufspannplatte (2), welche zum Befestigen und Entfernen von Giessformhälften an bzw. von den Aufspannplatten sowie zum Schliessen und Öffnen der Giessformhälften mittels hydraulisch betätigter Kraftübertragungsglieder von der festen ersten Aufspannplatte (1) fort- bzw. auf diese zubewegt werden kann, dadurch gekennzeichnet, dass die bewegliche zweite Aufspannplatte (2) zweigeteilt ist und eine Grundplatte (5) sowie eine damit in Verbindung stehende, der festen ersten Aufspannplatte (1) zugekehrte Montageplatte (6) enthält, dass die Grundplatte (5) aus ihrer vertikalen Arbeitsstellung heraus um eine ortsfeste horizontale Achse (8) in eine zumindest annähernd horizontale Montagestellung schwenkbar ist und dass die Montageplatte (6) verschiebbar auf der Grundplatte (5) gelagert ist und zumindest in deren Arbeitsstellung auf die feste erste Aufspannplatte (1) zu und von dieser fortbewegbar ist.

2. Druckgiessmaschine nach Anspruch 1, dadurch gekennzeichnet, dass die Grundplatte (5) in ihrer vertikalen Arbeitsstellung mechanisch mit der festen ersten Aufspannplatte (1) verriegelt ist.

3. Druckgiessmaschine nach Anspruch 2, dadurch gekennzeichnet, dass zur mechanischen Verriegelung der Grundplatte (5) schwingenförmige Verriegelungsarme (10) vorgesehen sind, die schwenkbar an der festen ersten Aufspannplatte (1) angelenkt sind und in der Arbeitsstellung der Grundplatte (5) ihnen zugeordnete Widerlager (12) im oberen Randbereich der Grundplatte (5) umgreifen.

4. Druckgiessmaschine nach Anspruch 3, dadurch gekennzeichnet, dass die freien Enden (11) der Verriegelungsarme (10) hakenförmig ausgebildet sind und in den Hakengrund hineinführende schräge Anlageflächen (16) aufweisen, dass die Grundplatte (5) zum Verriegeln in eine etwas über die vertikale Arbeitsstellung hinaus gegen die feste erste Aufspannplatte (1) geneigte Einfädelstellung schwenkbar ist, derart, dass die auf die Grundplatte (5) abgesenkten Verriegelungsarme (10) mit ihren schrägen Anlageflächen (16) dem beweglichen Widerlager (12) der Grundplatte 5 gegenüber liegen und dass die Grundplatte bei auf sie abgesenkten Verriegelungsarmen (10) aus ihrer geneigten Einfädelstellung in ihre vertikale Arbeitsstellung zurückschwenkbar ist, wobei die hakenförmigen Enden (11) die Widerlager (12) räumlich definiert umgreifen.

5. Druckgiessmaschine nach den Ansprüchen 1 bis 4, dadurch gekennzeichnet, dass das Verschieben der Montageplatte mittels hydraulischer Kolben/Zylinder-Einheiten (9) erfolgt.

6. Druckgiessmaschine nach Anspruch 5, dadurch gekennzeichnet, dass an der Montageplatte (6) mindestens zwei einander diametral gegenüberliegende Kolben/Zylinder-Einheiten (9) angreifen.

7. Druckgiessmaschine nach Anspruch 6, dadurch gekennzeichnet, dass vier Kolben/Zylinder-Einheiten (9) vorgesehen sind, von denen sich jeweils zwei diametral gegenüberliegen.

8. Druckgiessmaschine nach den Ansprüchen 5 bis 7, dadurch gekennzeichnet, dass die Führung der verschiebbaren Montageplatte (6) nicht starr, sondern nachgiebig ausgebildet ist, derart, dass die beiden Giessformhälften (3, 4) bei Parallelitätsabweichungen ausrichtbar und verspannungsfrei schliessbar sind.

9. Druckgiessmaschine nach Anspruch 8, dadurch gekennzeichnet, dass die Führung der Montageplatte (6) zumindest teilweise durch die an ihre angreifenden, an der Grundplatte (5) be-

0 043 527

festigten hydraulischen Kolben/Zylinder-Einheiten (9) erfolgt, deren Kolbenstangen (18) als Kugelköpfe (19) ausgebildete freie Enden aufweisen, die in Kugelpfannen (20) der Montageplatte (6) gelagert sind, wobei die Kugelpfannen quer zur Kolben/Zylinder-Längsachse zweigeteilt sind und unter Federspannung an den Kugelköpfen (19) anliegen, derart dass diese unter der Wirkung der auf sie einwirkenden Kraft der Kolben/Zylinder-Einheiten (9) erforderlichenfalls gegen die Wirkung der Federspannung um ein vorgegebenes Mass weiter in die Montageplatte (6) verlagerbar sind.

10. Druckgiessmaschine nach den Ansprüchen 5 bis 7, dadurch gekennzeichnet, dass als Kolben/Zylinder-Einheiten (9) Tandem-Anordnungen vorgesehen sind, bei denen jeweils zwei in getrennten Zylinderräumen (93, 94) wirkende Kolben (91, 92) gemeinsam auf eine an der Montageplatte (6) angreifende Kolbenstange (18) wirken, wobei die beiden einander diametral gegenüberliegenden Kolben/Zylinder-Einheiten (9, 9′) druckmässig jeweils derart miteinander gekoppelt sind, dass jeweils eine sich beim Verschieben der Kolben (91, 92) verkleinernde Zylinderkammer (95) der einen Kolben/Zylinder-Einheit leitungsmässig mit einer sich dabei vergrössernden Zylinderkammer (98′) der anderen Kolben/Zylinder-Einheit verbunden ist und umgekehrt.

11. Druckgiessmaschine nach den Ansprüchen 1 bis 10, dadurch gekennzeichnet, dass das Schwenken der Grundplatte (5) mittels hydraulischer Kolben/Zylinder-Einheiten (7) erfolgt.

12. Druckgiessmaschine nach den Ansprüchen 3 bis 11, dadurch gekennzeichnet, dass das Schwenken der Verriegelungsarme (10) mittels hydraulischer Kolben/Zylinder-Einheiten (15) erfolgt.

13. Druckgiessmaschine nach einem der Ansprüche 1 bis 12, dadurch gekennzeichnet, dass zur Befestigung der Giessformhälften (3, 4) an der festen ersten Aufspannplatte (1) sowie der Montageplatte (6) zumindest teilweise hydraulische oder pneumatische Formspanner (17) vorgesehen sind.

14. Druckgiessmaschine nach Anspruch 13, dadurch gekennzeichnet, dass als Formspanner (17) Kolben/Zylinder-Einheiten vorgesehen sind, mit parallel zur jeweiligen Aufspannebene verlaufenden kegeligen oder keilförmigen Kolbenfortsätzen, welche in korrespondierende kegelige oder keilförmige Ausnehmungen der Giessformhälften (3, 4) eingreifen.

15. Druckgiessmaschine nach den Ansprüchen 1 bis 14, dadurch gekennzeichnet, dass innerhalb der Giessformhälften (3, 4) benötigtes Kühlwasser, Druckluft und/oder Hydraulikflüssigkeit den Giessformhälften (3, 4) über in deren Boden angeordnete Leitungsanschlüsse, welche bem Aufspannen der Giessformhälften (3, 4) auf die feste Aufspannplatte (1) bzw. die Montageplatte (6) selbsttätig mit dort mündenden zugeordneten Leitungsanschlüssen koppelbar sind, zuführbar ist.

## Claims

1. Horizontal pressure die casting machine, with a vertically aligned fixed first clamping plate (1) and a vertically aligned mobile second clamping plate (2) which is spaced from said first plate and which, for securing mould halves to and removing them from the clamping plates and for closing and opening the mould halves, can be moved away from and towards the fixed first clamping plate (1) respectively by means of hydraulically operated force-transmitting devices, characterised in that the mobile second clamping plate (2) is divided into two and comprises a base plate (5) and a mounting plate (6) which is connected thereto and which is arranged to face towards the fixed first clamping plate (1), that the base plate (5) is pivotable from its vertical working position about a stationary horizontal axis (8) into an at least approximately horizontal mounting position, and that the mounting plate (6) is mounted to be displaceable on the base plate (5) and, at least in the working position thereof, can be moved towards and away from the fixed first clamping plate (1).

2. Pressure die casting machine according to claim 1, characterised in that in its vertical working position the base plate (5) is locked mechanically to the fixed first clamping plate (1).

3. Pressure die casting machine according to claim 2, characterised in that rocker-like locking arms (10) are provided for mechanical locking of the base plate (5) which are pivotably connected to the fixed first clamping plate (1) and, in the working position of the base plate (5), engage about abutment elements (12) which are associated with said arms and which are arranged in the upper edge region of the base plate (5).

4. Pressure die casting machine according to claim 3, characterised in that the free ends (11) of the locking arms (10) are hook-shaped and comprise inclined abutment surfaces (16) which lead into the well of the hook, that the base plate (5), for locking purposes, is pivotable into an insertion position inclined somewhat beyond the vertical working position towards the fixed first clamping plate (1), in such a manner that the lockig arms (10) lowered on to the base plate (5) have their inclined abutment surfaces (16) opposite the mobile abutment elements (12) of the base plate (5), and that when the locking arms (10) have been lowered on to it the base plate is pivotable back into its vertical working position from its inclined insertion position, whereat the hook-shaped ends (11) engage in spatially well-defined manner about the abutment elements (12).

5. Pressure die casting machine according to claims 1 to 4, characterised in that the displacement of the mounting plate (6) is effected by means of hydraulic piston-cylinder units (9).

6. Pressure die casting machine according to claim 5, characterised in that at least two piston-cylinder units (9) situated diametrally opposite one another act on the mounting plate (6).

7. Pressure die casting machine according to claim 6, characterised in that four piston-cylinder units (9) are provided which are situated opposite one another in twos.

8. Pressure die casting machine according to claims 5 to 7, characterised in that the guiding of the displaceable mounting plate (6) is not rigid but yieldable, in such a manner that the two mould halves (3, 4) can be aligned with one another when there are discrepancies in parallelism and are closable without strain.

9. Pressure die casting machine according to claim 8, characterised in that the guiding of the mounting plate (6) is effected at least partly by the hydraulic piston-cylinder units (9) which are connected with it and are secured to the base plate (5), and whose piston rods (18) are constructed so that their free ends constitute ball heads (19) mounted in ball cups or sockets (20) of the mounting plate (6), and the ball sockets are divided in two transversely to the piston-cylinder longitudinal axis and abut under spring preload on the ball heads (19), in such a manner that the latter can, under the effect of the force of the piston-cylinder units (9) acting on them, if necessary move further into the mounting plate (6) against the action of the spring preload, to a predetermined extent.

10. Pressure die casting machine according to claims 5 to 7, characterised in that tandem arrangements are provided as piston-cylinder units (9), so arranged that in each case two pistons (91, 92) acting in separate cylinder chambers (93, 94) act jointly on a piston rod (18) connected with the mounting plate (6), and the two piston-cylinder units (9, 9′) situated diametrally opposite one another are in each case so coupled with one another for pressure purposes that in each case a cylinder chamber (95) of one piston-cylinder unit, decreasing in size as the pistons (91, 92) are displaced, is connected by conduit means to a cylinder chamber (98′) then increasing in size of the other piston-cylinder unit, and vice versa.

11. Pressure die casting machine according to claims 1 to 10, characterised in that the pivoting of the base plate (5) is carried out by means of hydraulic piston-cylinder units (7).

12. Pressure die casting machine according to claims 3 to 11, characterised in that the pivoting of the locking arms (10) is effected by means of hydraulic piston-cylinder units (15).

13. Pressure die casting machine according to one of claims 1 to 12, characterised in that at least partly hydraulic or pneumatic mould clamping devices (17) are provided for securing the mould halves (3, 4) on the fixed first clamping plate (1) and the mounting plate (6).

14. Pressure die casting machine according to claim 13, characterised in that piston-cylider units are provided as mould clamping devices (17), with conical or wedge-shaped piston extensions which extend parallel to the respective clamping plane and which engage in corresponding conical or wedge-shaped recesses in the mould halves (3, 4).

15. Pressure die casting machine according to claims 1 to 14, characterised in that cooling water, air under pressure and/or hydraulic fluid needed within the mould halves (3, 4) is adapted to be fed to the mould halves (3, 4) via conduit connections which are arranged in their bottom portions and which when the mould halves (3, 4) are clamped on the fixed clamping plate (1) and the mounting plate (6) respectively are adapted to be coupled automatically with associated conduit connections which debouch in that region.

**Revendications**

1. Machine à mouler sous pression, horizontale, comportant un premier plateau de fixation (1) fixe, vertical, et un deuxième plateau de fixation (2) mobile, vertical, placé en face de lui et pouvant être éloigné et approché de lui au moyen d'organes de transmission d'énergie hydrauliques, pour la fixation de demi-moules aux plateaux de fixation et leur enlèvement de ceux-ci et pour la fermeture et l'ouverture de ces demi-moules, caractérisée par le fait que le plateau mobile de fixation (2) est en deux parties et comprend un plateau de base (5) et un plateau de montage (6) lié à lui, qui est dirigé vers le plateau fixe de fixation (1), que le plateau de base (5) peut basculer, autour d'un axe horizontal fixe (8), de sa position de travail verticale à une position de montage au moins approximativement horizontale, et que le plateau de montage (6) est monté mobile en translation sur le plateau de base (5) et, au moins dans la position de travail de ce dernier, peut être approché et éloigné du plateau fixe de fixation (1).

2. Machine à mouler sous pression selon la revendication 1, caractérisé par le fait que le plateau de base (5), dans sa position de travail verticale, est verrouillé mécaniquement au plateau fixe de fixation (1).

3. Machine à mouler sous pression selon la revendication 2, caractérisée par le fait que, pour le verrouillage mécanique du plateau de base (5), sont prévus des bras de verrouillage basculants (10) qui sont articulés au plateau fixe de fixation (1) et, quand le plateau de base (5) est en position de travail, enserrent des butées (12) placées à la partie supérieure du plateau de base (5).

4. Machine à mouler sous pression selon la revendication 3, caractérisée par le fait que les extrémités libres (11) des bras de verrouillage (10) sont en forme de crochet et présentent des surfaces d'appui obliques (16) menant au fond du crochet, que le plateau de base (5) peut, pour le verrouillage, être basculé dans une position d'enfilage un peu inclinée au-delà de sa position de travail verticale vers le plateau fixe de fixation (1), de façon telle que les surfaces d'appui obliques (16) des bras de verrouillage (10), abaissés sur le plateau de base (5), soient en face de la butée mobile (12) du plateau de base (5), et que le plateau de base peut, les bras de verrouillage (10) étant abaissés sur lui, être basculé en arrière de sa position d'enfilage inclinée à sa position de travail verticale, les extrémités en forme de crochet (11) enserrant les butées (12) de façon spatialement définie.

5. Machine à mouler sous pression selon les revendications 1 à 4, caractérisée par le fait que la translation du plateau de montage (6) s'effectue au moyen de vérins hydrauliques (9).

6. Machine à mouler sous pression selon la revendication 5, caractérisée par le fait que le plateau de montage (6) est attaqué par au moins deux vérins (9) diamétralement opposés.

7. Machine à mouler sous pression selon la revendication 6, caractérisée par le fait qu'il est prévu quatre vérins (9) diamétralement opposés deux à deux.

8. Machine à mouler sous pression selon les revendications 5 à 7, caractérisée par le fait que le guidage du plateau de montage mobile en translation (6) est, non pas rigide, mais souple, de façon telle que les deux demi-moules (3, 4), en cas de défauts de parallélisme, puissent s'aligner et se fermer sans déformation.

9. Machine à mouler sous pression selon la revendication 8, caractérisée par le fait que le guidage du plateau de montage (6) est assuré, au moins en partie, par les vérins hydrauliques (9) fixés au plateau de base (5) qui l'attaquent, les tiges de piston (18) de ces vérins ayant des extrémités libres en forme de tête sphérique (19) qui sont logées dans des cuvettes sphériques (20) du plateau de montage (6), ces cuvettes sphériques étant divisées en deux, perpendiculairement à l'axe longitudinal des vérins, et s'appuyant sur les têtes sphériques (19) sous l'action de moyens élastiques, de façon telle que ces têtes puissent entrer d'une quantité supplémentaire déterminée dans le plateau de montage (6) sous l'action de la force des vérins (9) qui agit sur elles, au besoin contre l'action des moyens élastiques.

10. Machine à mouler sous pression selon les revendications 5 à 7, caractérisée par le fait qu'il est prévu, comme vérin (9), des dispositifs tandems dans lesquels deux pistons (91, 92), mobiles dans des chambres de cylindre séparées (93, 94), agissent ensemble sur une tige de piston (18) attaquant le plateau de montage (6), les vérins diamétralement opposés (9, 9') étant accouplés en pression de façon telle qu'une chambre de cylindre (95) d'un vérin, diminuant de volume lors du déplacement des pistons (91, 92), soit reliée à une chambre de cylindre (98'), augmentant de volume, de l'autre vérin, et inversement.

11. Machine à mouler sous pression selon les revendications 1 à 10, caractérisée par le fait que le basculement du plateau de base (5) s'opère au moyen de vérins hydrauliques (7).

12. Machine à mouler sous pression selon les revendications 3 à 11, caractérisée par le fait que le basculement des bras de verrouillage (10) s'opère au moyen de vérins hydrauliques (15).

13. Machine à mouler sous pression selon l'une des revendications 1 à 12, caractérisée par le fait que, pour la fixation des demi-moules (3, 4) au plateau fixe de fixation (1) et au plateau de montage (6), sont prévus des serre-moule (17) au moins en partie hydraulique ou pneumatiques.

14. Machine à mouler sous pression selon la revendication 13, caractérisée par le fait qu'il est prévu, comme serre-moule (17), des vérins à appendices de piston coniques, ou en forme de coin, parallèles au plan de fixation qui s'engagent dans des évidements coniques, ou en forme de coin, correspondants des demi-moules (3, 4).

15. Machine à mouler sous pression selon les revendications 1 à 14, caractérisée par le fait que l'eau de refroidissement, l'air comprimé et/ou le liquide hydraulique nécessaires à l'intérieur des demi-moules (3, 4) peuvent être envoyés à ceux-ci par des raccords prévus dans le fond de ceux-ci qui, lors de la fixation de ceux-ci sur le plateau fixe de fixation (1) et le plateau de montage (6), peuvent s'accoupler automatiquement à des raccords associés des plateaux y débouchant.

Fig.1

0 043 527

Fig. 2

0 043 527

Fig.3

Fig. 4

0 043 527

Fig.5